Europäisches Patentamt

European Patent Office

Office européen des brevets

(19)

(11) Publication number: **0 300 745**
**A2**

# (12) EUROPEAN PATENT APPLICATION

(21) Application number: 88306621.9

(51) Int. Cl.⁴: **G21C 7/26**

(22) Date of filing: 20.07.88

(30) Priority: 23.07.87 JP 184390/87
02.09.87 JP 219678/87
18.12.87 JP 320319/87
27.05.88 JP 129949/88
10.06.88 JP 143174/88

(43) Date of publication of application:
**25.01.89 Bulletin  89/04**

(84) Designated Contracting States:
**DE FR GB**

(71) Applicant: **MITSUBISHI ATOMIC POWER
INDUSTRIES, INC**
4-1, 2-chome Shibakoen
Minato-ku Tokyo, 105(JP)

(72) Inventor: **Makihara, Yoshiaki Mitsubishi
Atomic Power**
**Ind. Inc. 4-1, 2-chome Shibakoen**
**Minato-ku Tokyo 105(JP)**
Inventor: **Ikeda, Yasuhiro Mitsubishi Atomic
Power**
**Ind. Inc. 4-1, 2-chome Shibakoen**
**Minato-ku Tokyo 105(JP)**
Inventor: **Tsumura, Naoki**
**40-8, 2-chome, Nishijo, Hasuda-city**
**Saitama-prefecture, 349-01(JP)**
Inventor: **Komano, Yasuo Mitsubishi Atomic
Power**
**Ind. Inc. 4-1, 2-chome Shibakoen**
**Minato-ku Tokyo 105(JP)**

(74) Representative: **Charlton, Peter John et al
Elkington and Fife High High Holborn House 52/54
High Holborn**
**London WC1V 6SH(GB)**

(54) **Reactivity control method of light-water cooled, lightwater moderated nuclear reactor core and apparatus therefor.**

(57) This invention relates to a method of controlling the reactivity of light-water-cooled, light-water-moderated reactor core and equipment used in this method.

The reactor core is separated into a water region through which light water passes and a substitution region occupied by a water displacer material with lower neutron moderation effect than that of light water (for example, a rare gas or heavy water). In the case of controlling the reactivity of the core, a fluid in the substituion region is substituted between light water and the water displacer material.

Such a method of controlling the reactivity of the core can be utilized for reactivity compensation in response to neutron energy spectral shift operation, load-follow operation, and a change between low-temperature conditions and high-temperature conditions of reactors.

In order to separate the core into the water region and the substitution region, water displacer tubes consisting of tubes with sealed top ends are provided for a fuel assembly. The water desplacer tubes are directly incorporated into the fuel assembly and are directly fixed, or a cluster having the water desplacer tubes are inserted into the fuel assembly.

# REACTIVITY CONTROL METHOD OF LIGHT-WATER-COOLED, LIGHT-WATER-MODERATED NUCLEAR REACTOR CORE AND APPARATUS THEREFOR

## FIELD OF THE INVENTION

This invention relates to a method for controling the reactivity of a nuclear power reactor, particularly, the core of a light-water-cooled, light-water moderated, pressurized water reactor, and apparatus therefor.

The reactivity control method and apparatus therefor of the present invention can be applied to the operation of a reactor having a so-called spectral-shift-type core wherein a neutron energy spectrum is shifted to increase the reactivity of the core for the life extension of a core, as well as to load-follow operation for controlling the output and reactivity of a reactor during this type of operation.

## DESCRIPTION OF THE PRIOR ART

It is known with regard to light-water-moderated, light-water-cooled nuclear reactors that as shown in FIG. 28 a spectrum-shift-type core having a water region 102 that light water flows through the interior of a core 10, and a substitution region 103 occupied by a fluid (e.g. rare gas or heavy water) with a low neutron moderation effect compared with light-water is operated to produce plutonium by shifting the neutron spectrum of the core to a high-energy side through charging a water displacer material such as a rare gas or heavy water into the substitution region 103 in the first half of an operation cycle, and then to burn plutonium effectively produced in the first half of the cycle by shifting the neutron spectrum to a low-energy side through substituting water for the water displacer material in the substitution region 103 in the second half of the operation cycle, whereby achieving the economization of an uranium resource.

Among inventions adopting this method are a method wherein a gas is sealed in the substitution region in the first half of the cycle and light water is substituted by the mechanical removal of sealing in the second half of the cycle (Japanese Patent Kokai Gazettes (Laid-Open) No. 137885/82, No. 134592/87), and a method wherein a gas is introduced from the lower part of a core (Japanese Patent Kokai Gazette (Laid-Open) No. 45589/88).

As stated above, the main problem with spectrum-shift-type reactor cores using fluids is how to substitute water (light water) for a water displacer material such as a gas or heavy water in the substitution region, and further it is important to pose no safety problem. In other words, when the water displacer material is replaced by water, reactivity is added to the core to increase output, so that it must be avoided that a large amount of the water displacement material is replaced by water in the undesirable period during operation (e.g. in case of leaking).

Moreover, the substitution region is required to be subdivided in the core in order to reduce the influence on power distribution, while the independence of each substitution region needs substitution one by one, taking great time and labor. Consequently, when an appropriate number of substitution regions are connected to each other to perform substitution between the water displacer material and water at a single point, substitution between the water displacer material and water in the entire connected substitution region is available.

That is, in the conventional technique stated above, substitution regions are connected to reduce time and labor in substitution between the water exclusion material and water, however this instead poses a problem that excessive reactivity is added to the core in the event of malfuctioning, whereby spoiling safety.

Furthermore, other conventional techniques proposed include a method wherein a water displacer material after water substitution is released into a primary coolant (Japanese Patent Kokai Gazette (Laid-Open) No. 137885/82), and a method wherein a tank is installed above the substitution region in order to hold a removed liquid (Japanese Patent Kokai Gazette ( Laid-Open) No. 288598/87). The former poses a problem that a facility is required to recover the water displacer material from the primary coolant, and the latter poses a problem that a structure of a reactor internals is complicated. Although it is conceivable that to avoid those problems a charging pipe and a discharging pipe are provided for the substitution region whereby performing substitution between the water displacer material and water, this will require two pipes for each substitution region and a structure in the reactor vessel will unavoidably become complicated.

Additionally, in conventional techniques using gas as a water displacer material, substitution regions are connected in series or connected at upper ends so that a single leakage above the substitution region will cause substitution between the water displacer material and water in the whole connected substitution regions.

Even further, in conventional techniques, substitution between the water displacer material and water requires the operation of various devices, which prevented rapid substitution.

In an attempt to improve those methods, a method (Japanese Patent Application No. 184390/87) is being proposed wherein a water displacer material or a moderator is discharged out of a reactor or charged into a reactor core by direct pressure reduction or pressurization.

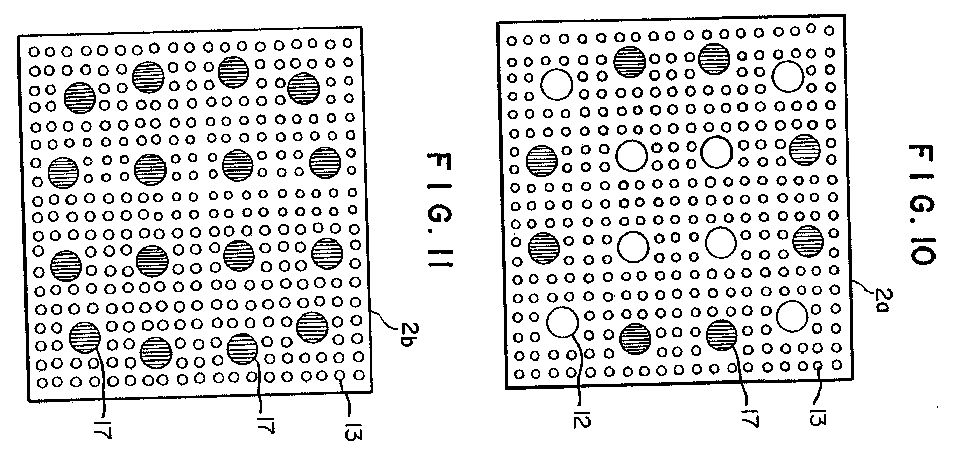

In addition, in order to provide a substitution region for a fuel assembly, a water displacer tube wherein a water displacer material is charged is required to be assembled, and the water displacer tube is assembled in the fuel assembly during production utilizing a space, for example, of a control rod guide thimble wherein no control rod for reactor shut-down or power regulation is inserted, and fixed for example by screws or welding. Fuel assemblies are classified into the one to allow the insertion of a control rod in the reactor and the one not to allow the insertion of the control rod, and in the case of a fuel assembly 2a to allow the insertion of the control rod as shown in FIG. 10, a control rod guide thimble 12 coexists with a water displacer tube 17.

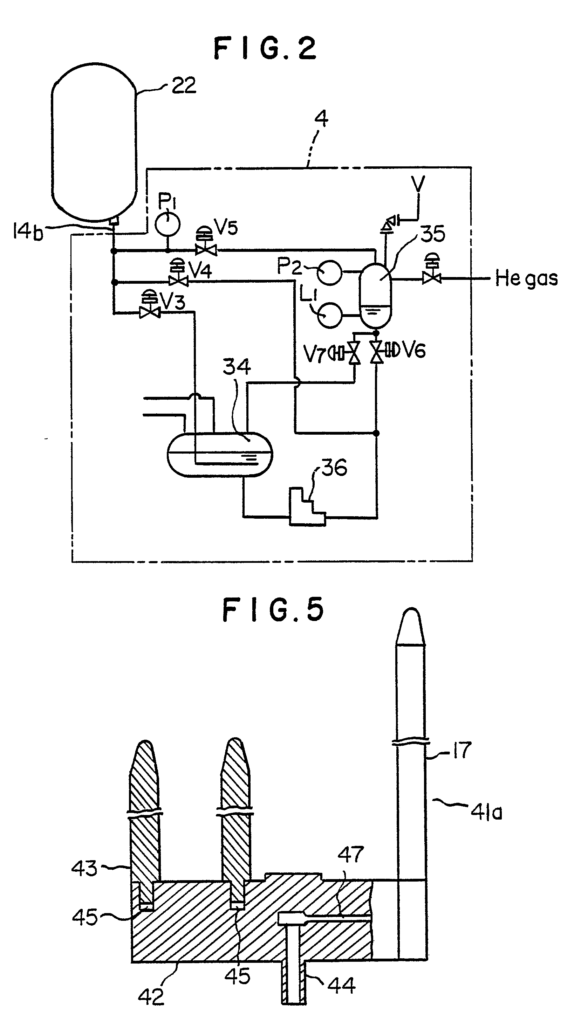

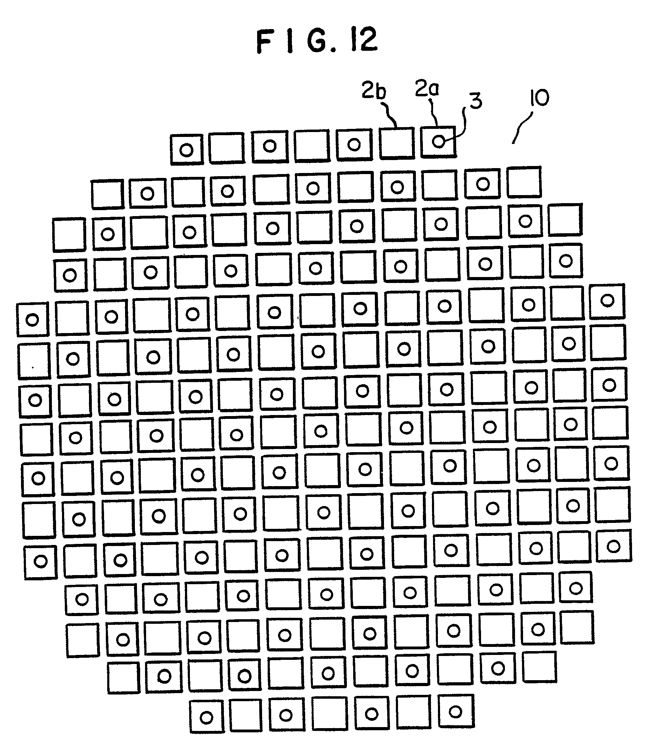

Moreover, in the case of a fuel assembly 2b not to allow the insertion of the control rod as shown in FIG. 11, the use of water displacer tubes 17 instead of all the control rod guide thimbles offers larger water exclusion volume and thus the greater effect of spectrum shift. In this case where all the control rod guide thimbles are replaced by water displacer tubes, one probable arrangement of water displacer tubes 17 in the fuel assembly is shown in FIG. 11, and the two kinds of fuel assemblies of 2a in FIG. 10 and 2b in FIG. 11 are present in the reactor core. The arrangement of the two kinds of fuel assemblies in the reactor is limited depending on the presence of a control rod cluster 3 shown in FIG. 12.

On the other hand, the fuel assemblies 2a and 2b are reshuffled in the reactor core 10 ordinarily at every one cycle operation (operational period : 1-2 years). In order to obtain optimum arrangement by considering the operational history of each fuel assemlby for the efficient generation of thermal power, flattening of power distribution, and the like, it is desirable that a fuel assembly can be loaded at any location in the reactor core.

Nevertheless, in the case of conventional fuel assemblies, water displacer tubes 17 are fixably assembled in production, so that this inevitably determines the location in the core, and replacement to other arrangement is impossible. In addition, although control rod guide thimbles and water displacer tubes of a few fuel assemblies can be exchanged at every cycle, it is not practical considering the accompanying complication of a fuel assembly structure along with time and labor required for replacement.

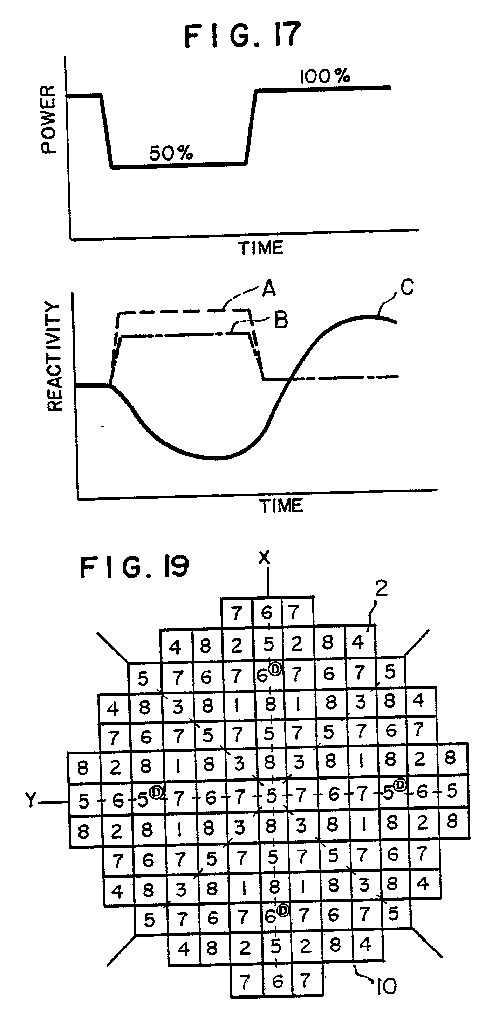

Furthermore, in the general case of changing reactor power, the following changes take place : a reactivity change A by the deviation of moderator temperature, a Doppler reactivity change B by the deviation of fuel temperature, and a reactivity change C by the deviation of a xenon amount. FIG. 17 shows an example of changes in power and reactivity of a reactor during load-follow operation.

A reactivity control system is required to be operated so as to compensate these reactivity changes.

FIG. 29 shows the cross section of a reactor vessel 22 of a pressurized water reactor. The reactor core 10 is loaded with fuels, and there are the following means to control the reactivity of the reactor core : control rods 32 and boron 33 contained in a primary coolant.

The control rods 32 are classified into a power regulating control rod with high reactivity value to be used for power regulation and a light-absorption control rod with lower reactivity value than the power regulating control rod to be used as an auxiliary for the power regulating control rod during load-follow operation.

Nevertheless, in the case where boric acid is employed in addition to control rods for reactivity control in pressurized water reactors, it is necessary to perform frequent boration and dilution of boron. The concentration or dilution of boric acid is normally effected by charging borated water or pure water into the inlet side of a primary coolant pump, but since the concentration of boric acid in the primary coolant is required to be changed uniformly, the rate of a reactivity change is low. Consequently, this is difficult to apply to the control of a quick reactivity change accompanying a quick power change, so that this is generally used for reactivity compensation in response to a change in a xenon amount. Moreover, the amount of water treatment accompanying a change in the boration of boron increases raising the cost of a water treatment system. The light-absorption control rod was intended to solve the above-stated problems in the use of boron, and is inserted into, or removed out of, the reactor core for reactivity control instead of the boration or dilution of boron, but this control rod greatly affects power distribution and requires a driving mechanism along with control rod guide tubes, whereby leading to cost increase. In addition, the presence of the moving part poses problems of reliability and durability.

Moreover, power control with only control rods worsens power distribution in the reactor core by inserting and withdrawing the control rods, reducing a safety margin.

Additionally, among measures to control reactivity in the reactor core, there is a method of changing the atomic number ratio of hydrogen to uranium (H/U) other than that of changing the amount of neutron-absorbing materials in the reactor core as stated above. This changes a neutron energy spectrum in the reactor core by changing H/U, whereby controlling reactivity.

In the case of pressurized water reactors, there is a proposition on a reactor having the function of changing H/U ratio in the reactor core as described in the invention (Japanese Patent Application No. 184390/87), but this is intended to decrease the use of a uranium amount of changing H/U ratio in the first and second half of an operation cycle, and not intended to control reactivity in response to a load change.

Furthermore, reactivity control facilities in pressurized water reactors include control rods, boron in a primary coolant (referred to as chemical shim) ; and burnable poison.

Among these facilities, the roles of chemical shim are as follows.

①  Reactivity compensation responding to a change between low- and high-temperature states

②  Reactivity compensation for accumulation and decay of xenon and samarium

③  Reactivity compensation for fuel burn-up

This chemical shim regulates reactivity by changing boron concentration in the primary Coolant Facilities required for this are a large-scale boron tank, a boron pump, a boron mixer, a boron recovery unit, piping, and the like, making facilities large, complex and costly.

On the other hand, there is a reactor core without chemical shim, but requires control rods about 3.5 times as many as that with chemical shim, causing higher cost increase instead.

Consequently, there is an idea wherein if items ② and ③ out of the above-stated roles of chemical shim are compensated with an increase in burnable poison and an increase in the number of control rods, as well as the role ① is compensated with a simple boron system, the number of control rods can be decreased to about 1.5 times for cost reduction as a whole (Japanese Patent application No. 251839/87). As this simple boron system, a small-capacity system is conceived which separates a reactor core into a coolant region and a substitution region, and substitution between borated water and light water is conducted only in the limited area of this substitution region. Still, the number of control rods becomes 1.5 times.

In the case of deleting chemical shim for cost reduction, the required number of control rods is about 3.5 times as large as the case with the use of chemical shim. Moreover, even in the case of supplementing reactivity compensation for a change between low- and high-temperature states out of the roles of chemical shim with the simple boron system, the number of control rods is required to be increased about 1.5 times.

Moreover, in the case of supplementing reactivity compensation for burn-up, one of the roles of chemical shim, with burnable poison and increased control rods, power peaking greatly rises compared with the case with the use of chemical shim. This is because chemical shim regulates reactivity uniformly in the reactor core, whereas in the case of reactivity regulation by shifting control rods as strong neutron absorbers the distortion of a neutron density distribution becomes greater, which will cause greater distortion of power distribution.

In addition, to counter these points, there has been proposed a reactivity control technique that can provide the function of chemical shim of reactivity compensation in response to a change between low- and high-temperature states through not using chemical shim but using a simple facility.

In this newly-proposed control technique, the core of a light-water-cooled, light-water-moderated reactor is separated into a coolant region through which a coolant passes and a substitution region capable of fluid substitution, and is so built as to allow only in this limited area the substitution between borated water, light water, and liquids or gases (e.g. heavy water, He gas, or Ar gas) with lower neutron moderating power than light water and as to be capable of providing the substitution region with an appropriate reactivity change by means of substitution, whereby controlling reactivity by changing a fluid in the substitution region responding the condition of the core.

Such a newly-proposed reactivity control technique is stated for example in Japanese Patent Application No. 129949/88.

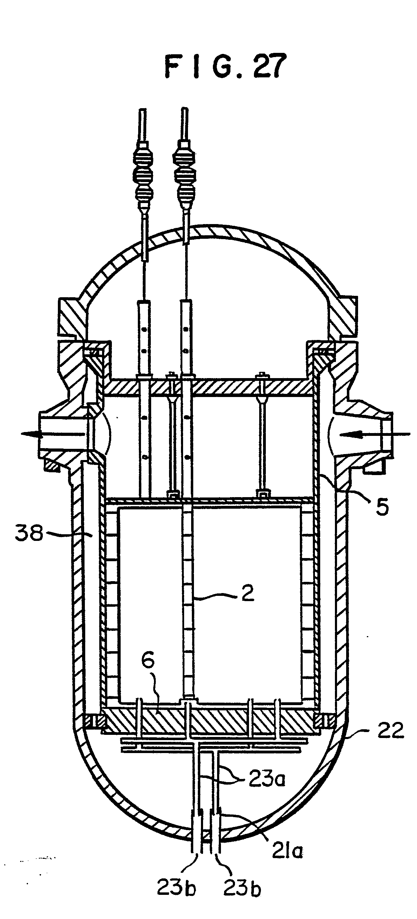

In such a newly-proposed reactivity control method, one example of installing charging pipes to charge a fluid into a substitution region provided in a fuel assembly is that as shown in FIG. 27 the location 21a of connecting charging pipes 23a on the side of a core internal to charging pipes 23b on the side of a reactor vessel 22 is provided under a lower core plate 6, and that the charging pipes 23b are drawn from the bottom of the reactor vessel 22 out of the vessel. In addition, the charging pipes 23a is required to be branched under the lower core plate 6 in order to be connected to each fuel assembly 2, and the system number of the charging pipes 23a is multiple, and it is necessary that fuel assemblies 2 belonging to each system are arranged uniformly in the reactor core.

In a piping structure as shown in FIG. 27, the charging pipes 23a are fixed to a core barrel 5, while the charging pipes 23b are fixed to the reactor vessel 22. As a result, the connection of the charging pipes 23a to 23b must be performed when the core barrel 5 is inserted in the reactor vessel 22, and yet the procedure cannot be checked visually because the location of the connection 21a is under the core barrel 5. However, even if the connection is executed by a remote-control robot, tools must be carried through a downcomer 38 between the core barrel 5 and reactor vessel 22, which is very troublesome.

Additionally, the charging pipes 23b penetrate the lower part of the reactor vessel 22, and in case where the charging pipes 23b fail outside the reactor vessel 22, the lack of proper countermeasures will cause the loss of a coolant in the reactor core, posing a safety problem.

In order to prevent this, the diameter of the charging pipes 23b must be so small that the flowrate of the leaving coolant will be less than the flowrate of make-up water from a facility provided for a primary system. In this case, the charging pipes 23b with excessively small diameter are undesirable because a period for the fluid substitution of the substitution region will be prolonged.

In addition, a number of charging pipes 23a intersecting each other under the lower core plate 6 are undesirable because a structure will become complicated as well as increase cost and the risk of failure.

This invention was proposed in view of the situations described above, and has as an object the provision of a reactivity control method and a reactivity control system for a reactor having a core with a water region and a substitution region capable of reducing time and labor in substitution between a water displacer material and water for rapid substitution, capable of reducing the influence of substitution between the water displacer material and water on power distribution by subdividing a water substitution region to a certain extent, capable of restricting the influence of a single leakage in the water substitution region to the location of the leakage.

An another object of the present invention is to provide a reactivity control method and a reactivity control system capable of applying the water substitution region to fuel assemblies without the necessity of modifying the structures of the fuel assemblies even in the case where the arrangement of the fuel assemblies in the reactor core is changed at every operational cycle.

A further object of the present invention is to provide an operational method capable of readily effecting reactivity control in response to a load change without worsening power distribution in the reactor core.

An even further object of the present invention is to provide a reactivity control method which solves the problems of an increase in the number of control rods and an increase in power peaking described above, with regard to reactor cores not using chemical shim.

Still a further object of the present invention is to provide a reactivity control system which has a piping structure for reactivity control capable of offering easy access to the location of the connection of charging pipes on the side of a core internal to charging pipes on the side of a reactor vessel, allowing no outflow of a coolant in the reactor core in case where the charging pipes fail outside the reactor vessel, and capable of realizing a simple structure and improving reliability.

## SUMMARY OF THE INVENTION

In accordance with these objectives, a reactivity control method for a light-water-cooled, light-water-moderated reactor core of this invention is characterized in that the core of a light-water-cooled, light-water-moderated reactor is separated into a coolant region through which a coolant passes and a substitution region capable of fluid substitution, and that the reactivity of the reactor core is controlled by fluid substitution between light water and a water displacer material in such substitution region.

A reactivity control system for a light-water-cooled, light-water-moderated reactor core of this invention is characterized in providing a fuel assembly which is equipped with one or plural hollow water displacer tubes with sealed top ends, equipped with sets each consisting of plural said water displacer tubes having the bottom ends of said water displacer tubes in communication with each other through a connecting tube, and equipped with a fluid charge/discharge connection opening for each of said sets, and in providing a fluid displacing device capable of charging a fluid into, and discharging the fluid out of, said water exclusion tubes through said fluid charge/discharge connection openings.

## BRIEF DESCRIPTION OF THE DRAWINGS

FIG. 1 is a diagrammatic representation of an embodiment of the invention showing a water displacing device for a reactor having a spectral-shift-type core;

Fig. 2 is a diagrammatic representation of another embodiment of the invention showing a water displacing device for a reactor having a spectral-shift-type core;

Fig. 3 is a transverse-cross-sectional representation showing a fuel assembly of a reactor having a spectral-shift-type core of this invention;

FIG. 4 is a vertical-cross-sectional representation of a core;

FIG. 5 is a vertical-cross-sectional representation of a water displacer tube cluster device shown in FIG. 4;

FIG. 6 is a plan view of the water displacer tube cluster device shown in FIG. 5;

FIG. 7 (a) is a vertical-cross-sectional representation showing the mounting condition of the water displacer tube cluster device to a fuel assembly;

FIG. 7 (b) is a b-b cross section in FIG. 7 (a);

FIG. 8 is a vertical-cross-sectional representation of a water displacer tube cluster device other than that in FIG. 4;

FIG. 9 is a plan view of the water displacer tube cluster device shown in FIG. 8;

FIG. 10 is a representation showing the distribution of water displacer tubes and control rod guide thimble tubes of a fuel assembly of the first kind;

FIG. 11 is a representation showing the distribution of water displacer tubes of a fuel assembly of the second kind;

FIG. 12 is a representation showing the distribution of control rod clusters of the reactor core;

FIg. 13 is a diagrammatic representation showing a reactor core;

FIG. 14 is a graph showing a relationship between the amount of a change in H/U ratio and the amount of a change in reactivity;

FIG. 15 is a graph showing changes with time in power, the location of a control rod, and the proportion of water displacing;

· FIG. 16 is a graph showing changes with time in power, the location of control rods, and the proportion of water displacing;

FIG. 17 is a graph showing examples of power and a reactivity change;

FIG. 18 is a diagrammatic representation of a reactivity control system;

FIG. 19 is a separation view of a substitution region;

FIg. 20 is a fluid condition diagram of a substitution region in response to burn-up;

FIG. 21 is a comparative diagram of the insertion ratio of control rods;

FIG. 22 is a comparative diagram of peaking changes;

FIG. 23 is a vertical-cross-sectional representation showing the condition that a piping structure of this invention is incorporated in a reactor vessel;

FIG. 24 is a vertical-cross-sectional representation showing the connected part of a fuel assembly and a piping structure;

FIG. 25 is an enlarged view of the portion L in FIG. 23;

FIG. 26 is a representation illustrating the arrangement of a piping structure under a lower core plate;

FIG. 27 is a vertical-cross-sectional representation showing a conventional piping structure;

FIG. 28 is a diagrammatic representation showing a reactor having a spectral-shift-type core; and

FIg. 29 is a vertical-cross-sectional representation of a reactor vessel.

## DESCRIPTION OF THE PREFERRED EMBODIMENTS

Details of this invention are explained hereinafter accompanying with drawings showing embodiments.

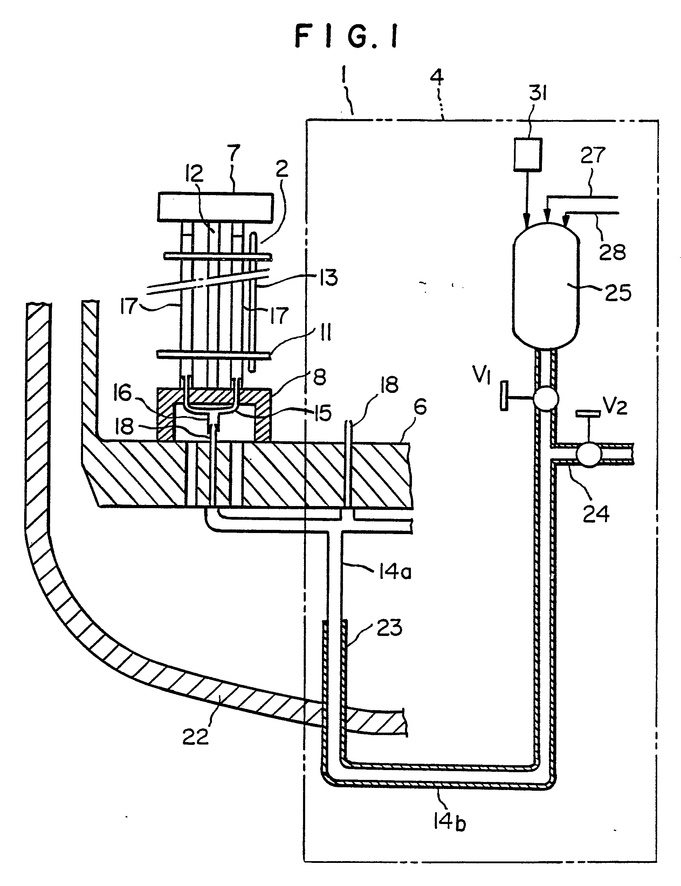

In FIG. 1, numeral 1 designates a water displacer material charging device, and the water displacer material charging device is equipped with a fuel assembly 2 and a fluid charge/discharge unit 4.

The fuel assembly 2 has the structural members of a top nozzle 7, a bottom nozzle 8, supporting grids 11, and control rod guide thimbles 12; fuel rods 13 and water displacer tubes 17 are housed between the top nozzle 7 and the bottom nozzle 8.

One or a plurality of the water displacer tubes 17 are provided for a fuel assembly, and are hollow tubes with sealed top ends. The water displacer tubes constitute one set with every plurality of pieces, and the one set of the water displacer tubes are linked by a linking tube 15 at the leg part of the bottom nozzle 8. The linking tube 15 has a connecting opening for the charge and discharge of a water displacer material.

A water displacer material charging pipe 14a on the side of a lower core internal has a charging opening 18 to each fuel assembly, which is linked with the same under the lower core plate 6 and connected to a water displacer material charging pipe 14b on the side of a reactor vessel 22 at a connecting location 23.

The water displacer material charging pipe 14b penetrates the reactor vessel 22 and is connected to a water displacer material charging tank 25 by way of a valve V1 on the upstream side of a branch pipe 24 of a fluid charge/discharge device 4. The water displacer material charging tank 25 is connected with a water displacer material charging system 27 and a water charging system 28. Moreover a pressurizing system 31 is provided and is capable of pressurizing a water displacing system.

A valve V2 is attached to the branch pipe 24, which is further connected to a blow-down system.

Subsequently, the operational method of the water displacer material charging device composed as stated above is described as follows.

a) After the fuel assembly 2 is loaded into a core 10 and a lid (not shown) is applied to the reactor vessel 22, a primary coolant is pressurized to about 157 atm. and is heated to about 290°C. At this time, the water displacer tube 17 is filled with water, and the water displacer system is pressurized to the same pressure as that of the primary coolant with the valve V2 closed and the valve V1 open. Under these conditions, reactor power is still zero.

b) The valve V1 is closed to exclude water from the water displacer material charging tank 25, which is instead filled with a water displacer material and pressurized to about 157 atm. Such a substance with low neutron absorption and a lower neutron moderation effect than water as a helium gas, an argon gas, or heavy water is used as the water displacer material.

c) Subsequently the valve V2 is opened. The branch pipe 24 is connected to a blow-down line, and the temperature of the water displacer tube 17 is about 290°C, the same as that of the coolant in the reactor core 10, so that flushing occurs accompanying pressure reduction, and the water in the water displacer tube 17 flows through the water displacer material charging pipes 14a and 14b, and the branch pipe 24 to the blow-down line.

d) At the time when the water of the water displacer tube 17 is removed, the valve V2 is closed and the valve V1 is opened; since the water displacer material charging tank 25 is pressurized, the water displacer material in the water displacer material charging tank is charged through the water displacer material charging pipes 14a and 14b into the water displacer tube 17.

e) If operation is started under this condition, the water displacer tube 17 is filled with the water displacer material and water is excluded. During operation, the valve V1 is opened to pressurize the water displacer material charging tank 25 to the same pressure of the primary coolant whereby preventing great differential pressure from applying to the water displacer tube 14.

f) In substituting water for the water displacer material in the water displacer tube 17 in the late period of operation, the valve V1 is closed to substitute water for the water displacer material in the water displacer material charging tank 25, and then procedures c), d), and e) are executed.

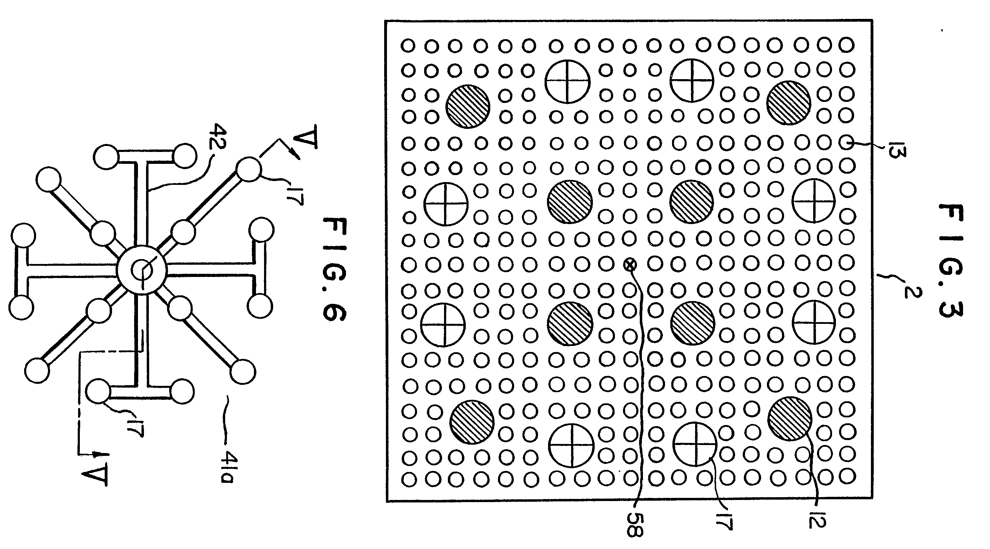

FIG. 3 is a horizontal sectional view of a fuel assembly 2 used in this invention. In this embodiment, a control rod guide thimble 12 and the water displacer tube 17 are in the row of a plurality of fuel rods 13 (that is, fuel rod bundle). The control rod guide thimble 12 is a hollow tube with open top end, and a control rod is inserted from the upper side.

The water displacer tube 17 is sealed at the top end, and linked at the bottom end. In this embodiment, eight water displacer tubes 17 are linked at the bottom ends to constitute one set, and the linking tube 15 has one connecting opening 16 to connect a charging opening 18 as shown in FIG. 1; in the case of a large number of the water displacer tubes 17, the addition of reactivity by substitution between the water displacer material and water is sometimes excessive. In such a case, the water displacer tube 17 are divided into two or more sets for linking, and a connecting opening 16 is provided for each set of the water displacer tubes 17.

FIG. 2 shows a water displacer material charging device of another embodiment. In this example, the structure of the reactor vessel 22 is the same as the example in FIG. 1, but a facility outside the reactor vessel 22 is different. A water displacer material charging pipe 14b connects with a fluid charge/discharge unit 4. The fluid charge/discharge unit 4 is equipped with a fluid recovery tank 34, a gas surge tank 35, and a water feed pump 36. The water discharge material charging pipe 14b branches into three lines outside the reactor vessel 22. One line goes through a valve V3 to the fluid recovery tank 34. Another line goes through a valve V5 to the gaseous phase part of the gas surge tank 35. The rest is a line going through the water feed pump 36 and a valve V4 and connecting with the water displacer material charging pipe 14b. The water displacer material charging pipe 14b outside the reactor vessel 22 is provided lower than the reactor vessel 22. This allows water or a water displacer material in the water displacer tube 17 to flow down not only by differential pressure between the water displacer tube 17 and the fluid recovery tank 34 but also by the force of gravity.

An operational method is described as follows.

a) After fuel loading and before start-up, the valve V4 is opened and the water feed pump 36 is actuated to charge water into the water displacer tube 17. When the water displacer tube 17 is pressurized by the water feed pump 36, the air in the water displacer tube 17 disappears by pressurization and dissolution, and the inside is filled with water.

b) After a lid is applied to the reactor vessel and a primary coolant is heated, a reactor reaches a high-temperature zero power stage when the valve V3 is opened to transfer water in the water displacer tube 17 into the fluid recovery tank 34. At this time, water in the water displacer tube 17 falls by flushing and head difference. When the water in the water displacer tube 17 is removed, the valve V3 is closed.

c) The inside of the gas surge tank 35 is pressurized with a gas suitable for a water displacer material such as argon or helium, and the gas is fed into the water displacer tube 17 by opening the valve V5.
Moreover, the valve V6 is opened to actuate the water feed pump 36, and then water in the fluid recovery tank 34 moves to the gas surge tank 35, whereby pressurizing the gas in the gas surge tank 35 and feeding the gas into the water displacer tube. When the pressure of the gas indicated by a pressure gage P1 or P2 reaches the pressure of a primary system, the water feed pump 36 is stopped and the valvs V5 and V6 are closed.

d) Under these conditions, operation is started. During operation, the pressure of the water displacement system is monitored with the pressure gage P1; when pressure of the water displacement system increases higher than the pressure of the primary system, the valve V3 is opened for pressure reduction by transferring the gas in the water displacer tube 17 to the fluid recovery tank 34, and when the pressure of the water displacement system decreases lower than the pressure of the primary system, the valves V5 and V6 are opened for pressurization by actuating the water feed pump 36. The gas surge tank 35 is equipped with a level gage L1 which monitors an appropriate water level in the tank.

e) In effecting a spectral shift in the second half of an operational cycle, first the valve V3 is opened to transfer the gas in the water displacer tube 17 into the fluid recovery tank 34. At this time, the process of gas discharge can be monitored with the pressure gage P1. That is, after the valve v3 is opened, the pressure indicated by the pressure gage P1 decreases, and when gas discharge finishes, the pressure becomes contant. Moreover, if the indication of the pressure gage increases or shows a little amount of a decrease, a leakage in the water displacement system is indicated. When gas exclusion is completed, the valve V3 is closed and the valve V4 is opened instead to actuate the water feed pump 36, which feeds water in the fluid recovery tank 34 into the water displacer tube 17.

Additionally, even in case where the water displacement system is leaking, the water displacer material can be replaced with water by repeating pressure reduction and pressurization if the amount of a leakage is less than the amount of discharge.

In the embodiments shown in FIG. 1 and FIG. 2, the water displacement system is a single system for simplified explanation, but in order to decrease the addition of reactivity by a single substitution process between the water displacer material and water as well as to increase stability, a plurality of water displacer material charging systems can be provided.

The embodiments explained above are examples in the case of pressurized water reactors, but spectral-shift-type operation can be conducted also in boiling water reactors according to the same method. In boiling water reactors, the ordinary operational pressure is about 70 atm., and at this time the coolant temperature is about 300°C, so that substitution between a water displacer material and water can be performed by providing a water displacement region in the core and by the pressure reduction and pressurization of this region.

In this invention, the water displacer tube is separated from a primary coolant. As a result, there are no such troubles encountered in conventional techniques as the water level in the water displacer tube becomes unstable, and as a gas enters the primary coolant.

Moreover, in general, when water enters the water displacer tube, reactivity is added and power increases. In this invention, the water displacer tube has a sealed top end and linked bottom end. Consequently, even in case where the water displacer tube fails under the condition that a water displacer material is charged in the water displacer tube, water enters only this water displacer tube. In conventional techniques, water displacer tubes in a fuel assembly are linked at the upper part, so that if the linked part leaks, water enters all the water displacer tubes.

That is, in this invention, the amount of reactivity addition is small and stability is high in case where the water displacer tube leaks.

Moreover, in conventional techniques, it is very difficult to monitor the water level and the like in the water displacer tube, whereas in this invention, the condition inside the water displacer tube can be known by monitoring the pressure gage equipped for the water displacer material charging pipe.

In addition, the water displacer material is discharged out of the reactor vessel by means of a pressure difference by utilizing high pressure and high temperature inside the reactor, so that the water displacer material does not mix with the primary coolant.

Furthermore, the discharge of the water displacer material and the charge of water can be executed with a single pipe, so that core internals do not become complicated.

In the next place, an embodiment is explained wherein the water displacer tube is provided not by fixation to the fuel assembly but as a water displacer tube cluster device.

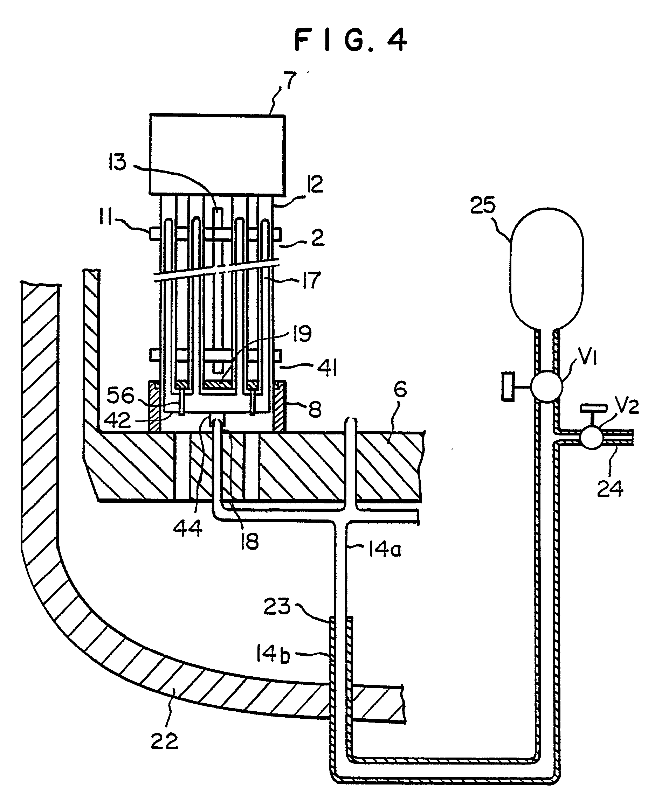

In FIG. 4, numeral 41 designates the water displacer tube cluster device, and the water displacer tube cluster device 41 is attached to the fuel assembly 2. The fuel assembly 2 has the structural members of a top nozzle 7, a bottom nozzle 8, a spacer grid 11, a control rod guide thimble 12, and a bottom nozzle adaptor plate 19, and a fuel rod 13 is placed between the top nozzle 7 and the bottom nozzle 8. The fuel assembly 2 is installed on a lower core plate 6 in a reactor vessel 22. The fuel assembly 2 is classified into the two kinds; a fuel assembly 2a which allows the insertion of a control rod in the core and a fuel assembly 2b which does not allow the insertion of a control rod in the core, so that responding to such different kinds of fuel assemblies a water displacer tube cluster device 41 is also classified into the two kinds; a water displacer tube cluster device 41a applied to the fuel assembly 2a which allows the insertion of a control rod in the core, and a water displacer tube cluster device 41b applied to the fuel assembly 2b which does not allow the insertion of a control rod in the core.

First the water displacer tube cluster device 41a is explained.

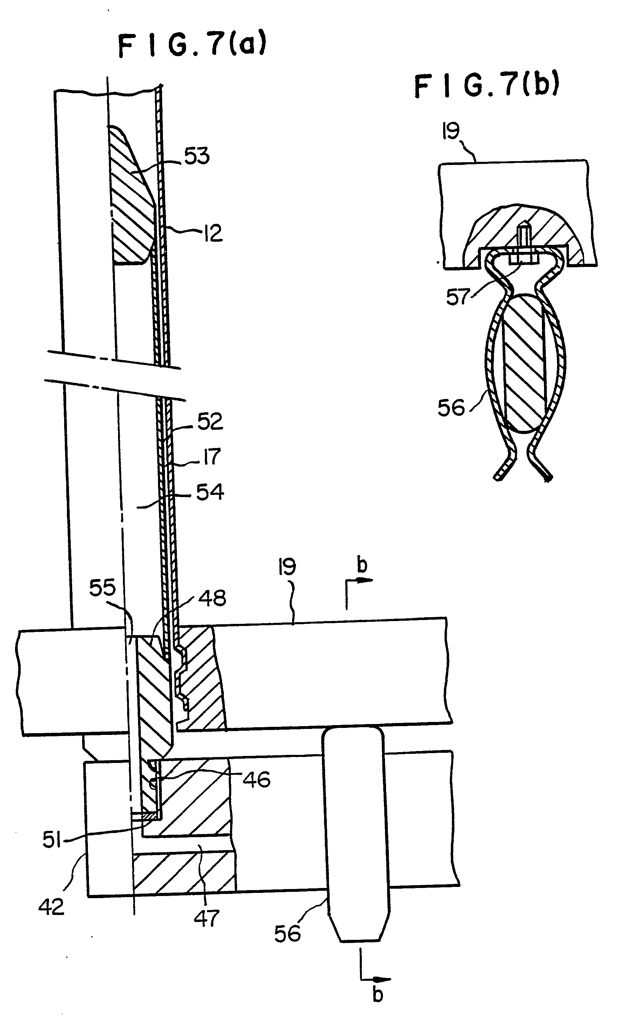

The water displacer tube cluster device 41a, as shown in FIG. 5 and FIG. 6, has a spider 42 and is provided with a plug 43 and a water displacer tube 17 which rise on the spider 42. A water displacer material charge/discharge opening 44 opened downward is formed in the center of the spider 42, and moreover, a plug attaching hole 45 and a water displacer tube attaching hole 4b (FIG. 7 (a)) are formed in the specified positions in the spider 42 so as to be opened upward. In addition, the spider 42 is provided with a fluid passage 47, which communicates the water displacer material charge/discharge opening 44 with the water displacer tube attaching hole 46.

The bottom end of the plug 43 is inserted into the plug attaching hole 45, and the plug 43 rises on the spider 42 fixed to the spider 42 by an arbitrary fixing means such as screwing or welding. On the other hand, the bottom end of the water displacer tube 17 is inserted into the water displacer tube attaching hole 46, and the water displacer tube 17 rises on the spider 42 fixed to the spider 42 by an arbitrary means such as screwing or welding. In an embodiment shown in FIG. 7 (a), a seal packing 51 is sandwiched between a bottom end plug 48 and the spider 15 in order to prevent a moderator and the like from entering between the bottom end plug 48 and the spider 15. However, the seal packing 51 is unnecessary in the case where the bottom end plug 48 and the spider 42 are made of the same material and are welded with each other.

Both of the plug 43 and the water displacer tube 17 have an outside diameter capable of being closely inserted from under into a control rod guide thimble 12, but as for length, the plug 43 is short and even when a control rod element (not shown) of a control rod cluster is inserted from above into the control rod guide thimble 12, the control rod element does not interfere with the plug 43. On the other hand, the water displacer tube 17 has a length capable of being inserted from under deeply enough into the control rod guide thimble 12.

The water displacer tube 17 is equipped with a tube part 52, a top end plug 53 to close the top end of the tube part 52, and a bottom end plug 48 to close the bottom end, which altogether cowork to form an internal space 54, and a through hole 55 is provided for the bottom end plug 48, so that the internal space 54 is in communication with the fluid passage 47 of the spider 42 by way of this through hole 55.

In the case of fixing the water displacer tube cluster device 41 removably to the fuel assembly 2, the spider 42 is attached to a bottom nozzle adaptor plate 19 of the fuel assembly 2. As for an attachment used in this case, in this embodiment as shown in FIG. 7 (a) and (b), a spring clip 56 is fixed with a screw 57 to the bottom nozzle adaptor plate 19, and the spider 42 is held under the bottom nozzle adaptor plate 19 with this spring clip 56, whereby attaching the water displacer tube cluster device 41 to the fuel assembly 2.

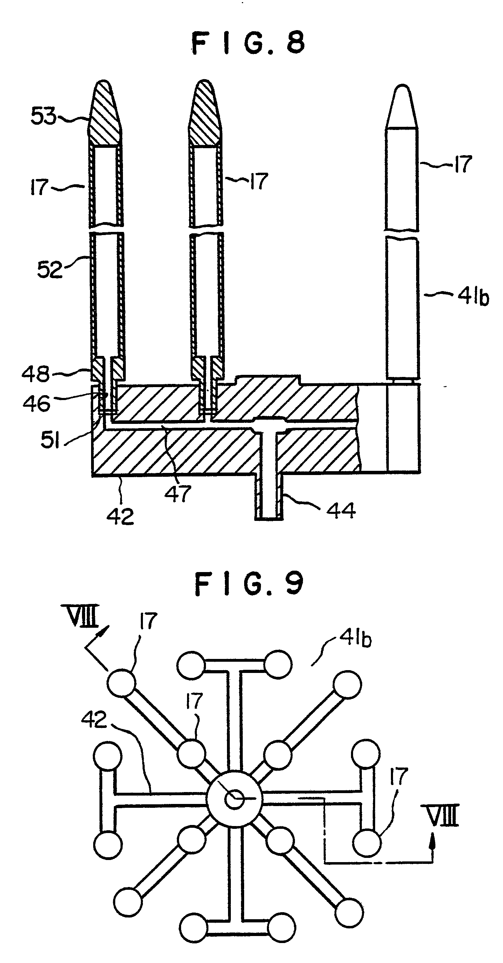

FIG. 8 and FIG. 9 show the water displacer tube cluster device 41b applied to the fuel assembly 2b which does not allow the insertion of a control rod in the core.

The water displacer tube cluster device 41b does not have the plug 43 but has only the water displacer tube 17 instead, and yet other composition is the same as the water displacer tube cluster device 41a.

On the side of lower core internals, as shown in FIG. 4, a water displacer material charging pipe 14a is provided and the water displacer material charging pipe 14a has a charging opening 18 on the top end to be inserted into the water displacer material charge/discharge opening 44 of the spider 42 and to charge a water displacer material into the spider 42 or thee water displacer tube 17, and is linked under the lower core plate 6 and connected to a water displacer material charging pipe 14b on the side of a reactor vessel 22 in a connecting position 23.

The water displacer material charging pipe 14b penetrates the reactor vessel 22 and connects through a valve V1 with a water displacer material charging tank 25.

In the case of fixing the water displacer tube cluster device 41 with such a composition to the fuel assembly 2, taking as an example the water displacer tube cluster device 41a, the water displacer tube 17 and the plug 43 are inserted from the bottom and of the fuel assembly 2a into the control rod guide thimble 12 of the fuel assembly 2a, and under this condition the spider 42 is clipped for holding with the spring clip 56 attached to the bottom nozzle adaptor plate 19 of the fuel assembly 2a.

In this manner, fixing the water displacer tube cluster device 41a to the fuel assembly 2a is completed. Subsequently, this fuel assembly 2a is installed on a lower core plate 6, and at this time, the water displacer material charge/discharge opening 44 of the spider 42 is fitted to the charging opening 18 of the water displacer material charging tube 14a. On the other hand, the fuel assembly 2b, after provided with the water displacer tube cluster device 41b, is loaded into the core 10, and the water displacer material charge/discharge opening 44 is connected to the water displacer material charging pipe 14a in the same manner. Under such conditions, moderator control is conducted as follows.

a) After the fuel assembly 2 is loaded into the core 10 and a lid (not shown) is applied to the reactor vessel 22, a primary coolant is pressurized to about 157 atm. and is heated to about 290 °C. At this time, the water displacer tube 17 is filled with water, and a water displacer system is pressurized to the same pressure as that of the primary coolant with the valve V2 closed and the valve V1 open.
Under these conditions, reactor is still zero.

b) Subsequently, the valve V1 is closed to exclude water from the water displacer material charging tank 25, which is instead filled with a water displacer material and pressurized to about 157 atm.
Such a substance with low neutron absorption and a lower neutron moderation effect than water as a helium gas, an argon gas, or heavy water is used as the water displacer material.

c) Subsequently the valve V2 is opened.
The branch pipe 24 is connected to a blow-down line, and the temperature of the water displacer tube 17 is about 290 °C, the same as that of the coolant in the core 10, so that flushing occurs accompanying pressure reduction, and the water in the water displacer tube 17 flows through the water displacer material charging pipes 14a and 14b, and the branch pipe 24 to the blow-down line.

d) At the time when the water of the water displacer tube 17 is removed, the valve V2 is closed and the valve V1 is opened, since the water displacer material charging tank 25 is pressurized, the water displacer material in the water displacer material charging tank is charged through the water displacer material charging pipes 14a and 14b into the water displacer tube 17.

e) If operation is started under this condition, the water displacer tube 17 is filled with the water displacer material and water is excluded. During operation, the valve V1 is opened to pressurize the water displacer material charging tank 25 to the same pressure of the primary coolant whereby preventing great differential pressure from applying to the water displacer tube 17.

f) In substituting water for the water displacer material in the water displacer tube 17 in the late period of operation, the valve V1 is closed to substitute water for the water displacer material in the water displacer material charging tank 25, and then procedures c ), d), and e) are executed.

In the case where one cycle of reactor operation is ended, and the arrangement of the fuel assembly 2 in the core 10 is changed and thus the arrangement of the water displacer tube 17 in the fuel assembly 2 is changed, the water displacer tube cluster device 41 is exchanged.

In this case, the spider 42 is pulled against the spring holding power of the spring clip 56, the spider 42 is withdrawn out of the bottom nozzle adaptor plate 19 of the fuel assembly 2, and thus the water displacer tube cluster device 41 is disengaged to be replaced by another water displacer tube cluster device.

In this invention, a water displacer tube cluster having a plurality of water displacer tubes is fabricated, and is attached to the bottom surface of the bottom nozzle of a fuel assembly. There are the two kinds of water displacer tube clusters : the one for a fuel assembly which allows the insertion of a control rod and the other for a fuel assembly which does not allow the insertion of a control rod.

The adoption of the water displacer tube cluster permits all fuel assemblies to have the same specifications as well as permits the water displacer tube cluster to be engaged to, or to be disengaged from, the reactor vessel during regular inspection, and exchanging water displacer tube clusters when necessary permits fuel assemblies to be arranged in the arbitrany core position.

Hence, the adoption of the water displacer tube cluster provides fuel assemblies with a unified structure, and exchanging the water displacer tube clusters allows fuel assemblies to be arranged in any position in the core, and exchanging the water displacer tube clusters is easier than a method of exchanging a water displacer material charging pipe which is directly provided for a fuel assembly.

Subsequently, an embodiment is explained wherein this invention is applied for the load-follow operation of a nuclear reactor.

In this invention, such a fuel assembly is used as to be employed in the core wherein a region other than fuel elements is separated into a region t hrough which a coolant passes and a region into which a water displacer material or water is charged.

FIG.3 shows a horizontal sectional view of a fuel assembly 2 used in this invention. In this embodiment, there are control rod guide thimbles 12, water displacer tubes 17, and an instrumentation guide tube 58 in fuel rods 13 in 19x19 arrangement (that is, fuel rod bundle). The control rod guide thimble 12 is a hollow tube with an open top end, and a control rod is inserted from above, and water is filled when the control rod is withdrawn.

The water displacer tube 17 has a sealed top end, and linked at the bottom and to a fluid charge/discharge unit 4 outside the reactor vessel.

As a water displacer material, a gas such as helium or argon, or heavy water is used.

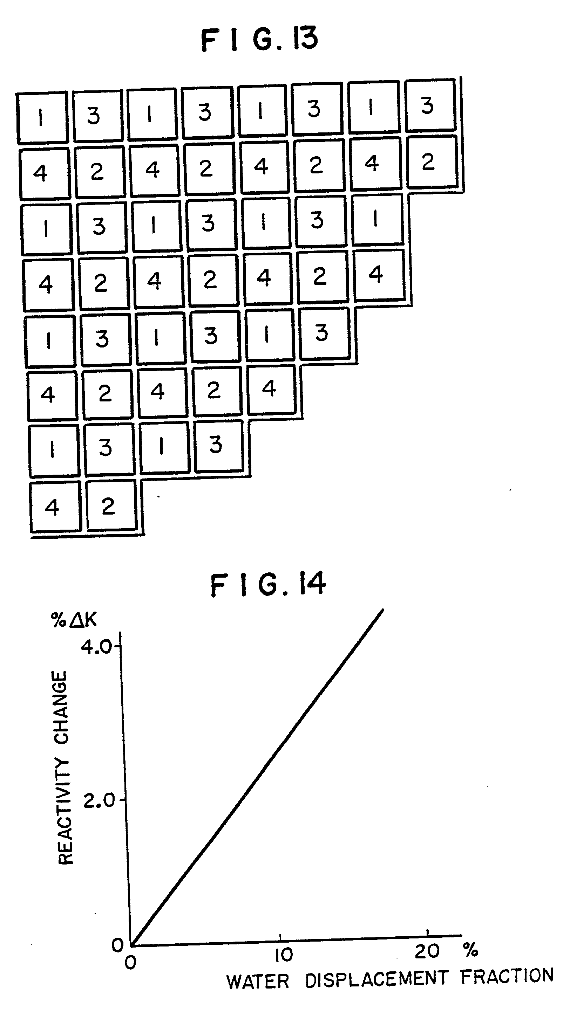

In order to perform fine reactivity control in the core, fuel assemblies are separated into a plurality of groups. FIG.13 shows a cross section of the core as well as an example of grouping of the fuel assemblies.

In this example, the fuel assemblies are separated into four groups from the first group to the fourth group, and a fluid in water displacer tubes in each group can be replaced independently of other groups.

Subsequently, the method of load-follow operation for a nuclear reactor with the composition stated above is explained.

Precedures from a) to e) are the same as in the case of the first embodiment described earlier.

f) In order to substitute water for a water displacer material in a water displacer tube 17 in load-follow operation, a valve V1 is closed to substitute water for the water displacer material in a water displacer material charging tank 25, and then procedures c), d), and e) are executed.

FIG.14 shows a typical example of the amount of a change in a H/U ratio against the amount of a reactivity change. This figure varies with absolute values of the H/U ratio and the like, and in the case here, the H/U ratio is 4.5 when water is charged in a water displacement region.

The amount of controlled reactivity in load-follow operation differs with the width of a power change, and is about 3.5% $\Delta\rho$ at a maximum during 100% - 0% power changes. Consequently, to compensate total reactivity control with a change in the H/U ratio requires about 15% change in water displacement fraction. This value depends on the H/U ratio, but 20% is sufficient in the practical range of H/U.

Moreover, as for a reactivity change by xenon in load-follow operation, about 1% $\Delta K$ is enough at a maximum, and if only the reactivity change by xenon is compensated with a change in the H/U ratio as well as other reactivity changes are compensated with control rods, about 5% change is necessary for water displacement fraction.

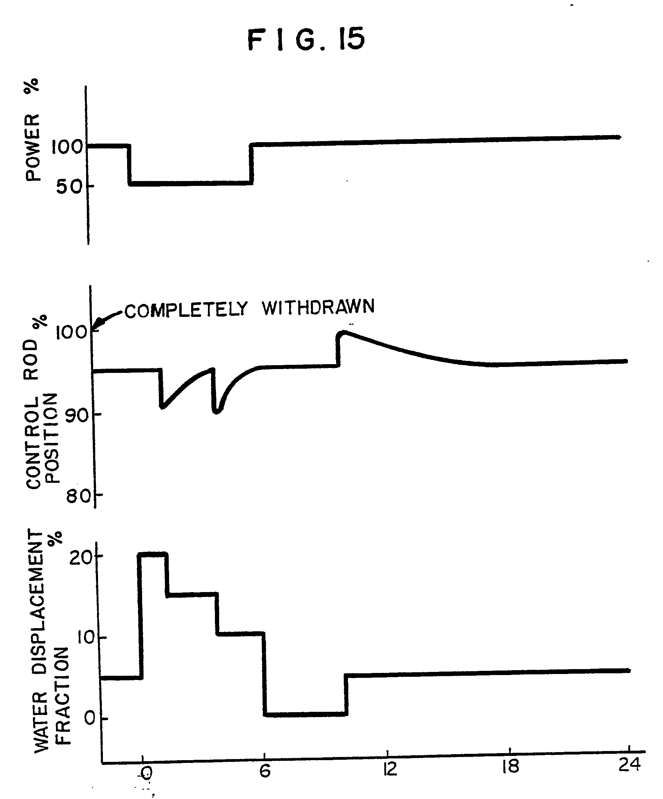

FIG.15 shows an example of operation in the case where the total reactivity change was compensated with a change in the H/U ratio in the daily load-follow operation of 100% power for 18 hours and 50% power for 6 hours. In this example, water displacer tubes of the whole fuel assemblies were used and the water displacement fraction was about 20% at a maximum.

Additionally, fuel assemblies are separated into 4 groups in order to change the H/U ratio in 5 steps.

As a result, a change in water displacement fraction is not continuous, so that control rods are operated as an auxiliary means to maintain constant power.

As shown in FIG.15, control rods are moved only slightly in the vicinity of the top and of the core for power compensation, and thus power distribution in the core becomes very stable.

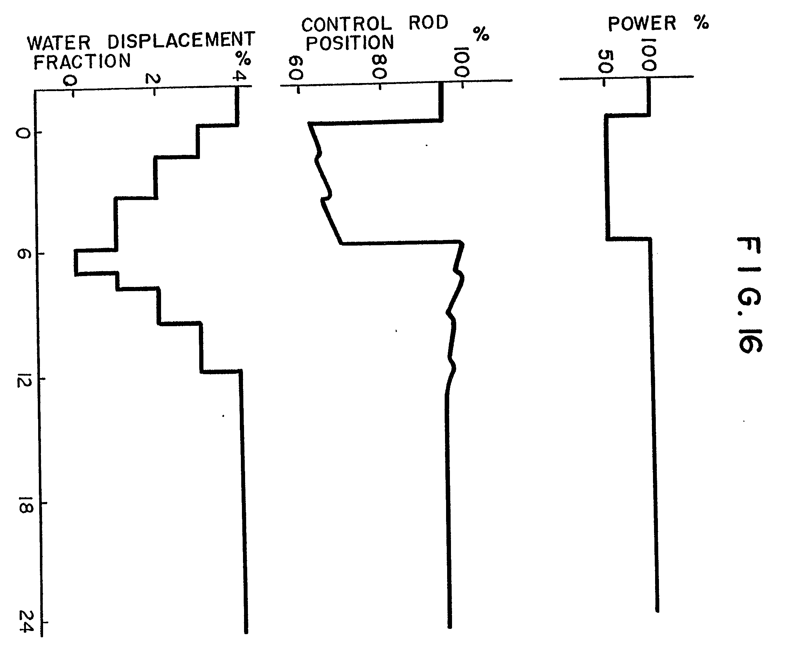

FIG.16 shows an example of an operational method where in a xenon change is compensated mainly with a change in a H/U ratio.

In this example, the water displacement fraction adopted in load-follow operation is 4% at a maximum. These water displacement regions are separated into 4 groups and a H/U ratio can be changed stepwise.

In order to decrease power to 50%, control rods are inserted to about 60% position in the core. After power decrease the compensation of a reactivity change accompanying xenon accumulation is performed chiefly by changing water displacement fraction. The reason why the control rod position varies at low power is to control power distribution, and the reason of a stepped change is to compensate a reactivity change caused by changing water displacement fraction stepwise. After 6 hours when power is returned to 100%, water is removed stepwise again, in order to compensate a reactivity change by xenon.

In this invention, most of reactivity control in load-follow operation is conducted by means of control rods and a change in water displacement fraction in the core, so that no addition of equipment is required for load-follow operation.

More specifically, the concentration and dilution of boric acid is not performed in load-follow operation, so that the addition of equipment with regard to the concentration and dilution of boric acid is unnecessary.

Moreover, there is no need for using light-absorbing control rods whereby being capable of avoiding cost increase.

Additionally, the H/U ratio can be varied uniformly along the axial direction, so that a change in power peaking factor in the axial direction can be controlled lower than the case with using control rods. As a result, a safety margin is not reduced by load-following operation.

As described above, in this invention, a reactivity change during a load change is compensated by the substitution of a fluid in water displacement regions, so that the movement of control rods is greatly reduced as well as a change in the concentration of boric acid in the primary coolant can be reduced to almost zero.

In conventional load-follow methods, xenon compensation was performed by boric acid, so that especially the limitation of the dilution capacity of boric acid resulted in the limited length of a period to permit load follow. Moreover, boric acid could not respond to a quick reactivity, whereby restricting a prompt recovery capability to 100% power. In this invention, these problems can be solved at once without the addition of equipment, and the capacity of responding to load-follow operation is substantially improved. Furthermore, control rods for load follow are not required whereby offering great cost reduction.

Susequently, another embodiment is explained.

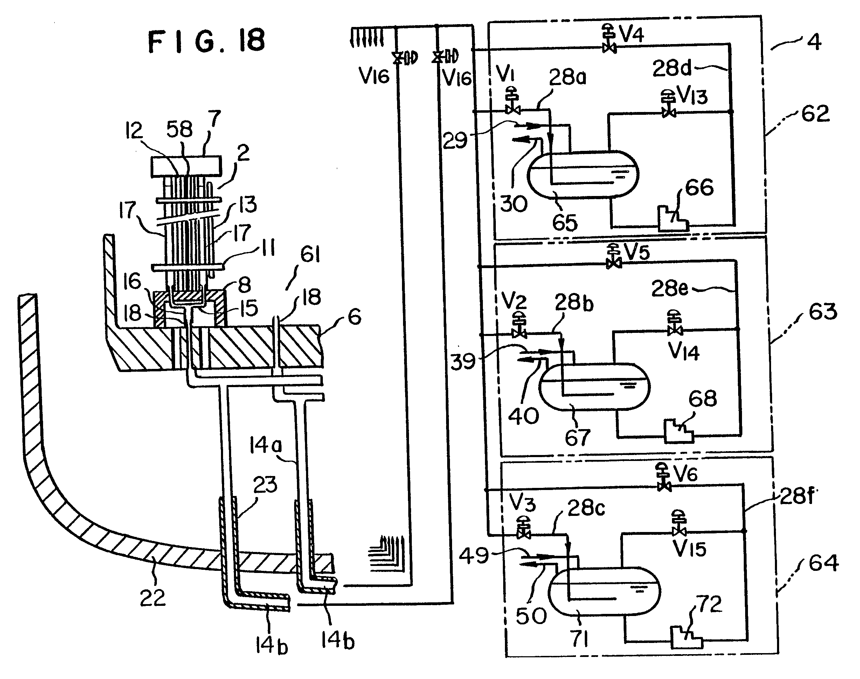

FIG. 18 shows reactivity control equipment used in the case of performing a reactivity control method for a core of a light-water-cooled, light-water-moderated nuclear reactor in this invention.

In FIG.18, numeral 61 designates the reactivity control equipment, and the reactivity control equipment 61 is equipped with a fuel assembly 2 and a fluid charge/discharge device 4.

The fuel assembly 2 has structural members of a top nozzle 7, a bottom nozzle 8, spacer grids 11, and control rod guide thimbles 12 ; fuel rods 13, water displacer tubes 17, and an instrumentation guide tube 58 are placed between the top nozzle 7 and the bottom nozzle 8.

One or a plurality of the water displacer tubes 17 are provided for a fuel assembly, and are hollow tubes with sealed top ends. The water displacer tubes constitute one set with every plurality of pieces, and the one set of the water displacer tubes are linked by a linking tube 15 at the leg part of the bottom nozzle 8. The linking tube 15 has a connecting opening 16 for the charge and discharge of light water or borated water or heavy water. On the other hand, the fluid charge/discharge unit 4 has water displacer material charging pipes 14 a and 14b, a light water charge/discharge system 62, a borated water charge/discharget system 63, and a heavy water charge/discharge system 64.

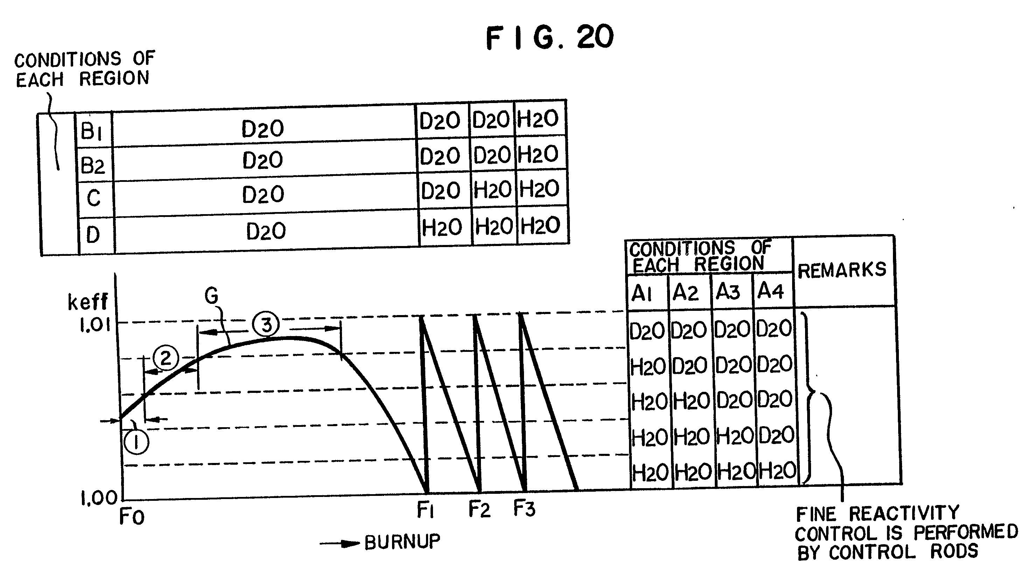

FIG.19 clearly shows the grouping of assemblies 2 in the cross section of the core 10. Each assembly is separated into a plurality of groups so as to reduce a power peaking anomaly after replacement as well as to realize the sum of the same set symmetrical to center axes X and Y of the core and to be arranged uniformly in the core ; the charging openings 18 are linked under a lower core plate 6 according to every grouping, and connected to water displacer material charging pipes 14a of the number corresponding to that of grouping.

The water displacer material charging pipes 14b of the number corresponding to that of grouping penetrate a reactor vessel 22 and connect through a valve 16 to the light water charge/discharge system 62, the borated water charge/discharge system 63, and the heavy water charge/discharge system 64. The light water charge/discharge system 62 is equipped with a light water tank 65 and a light water feed pump 66. The borated water charge/discharge system 63 is equipped with a borated water tank 67 and a borated water feed pump 68. The heavy water charge/discharge system 64 is equipped with a heavy water tank 71 and a heavy water feed pump 72.

Fig.19 is an example of grouping of the fuel assembly 2 used in this core.

In the example in FIG.19, 121 assemblies are separated into 8 groups : a region A1, (8 assemblies); a region A2 (8 assemblies); a region A3 (8 assemblies); a region A4 (8 assemblies); a region B1 (18 assemblies); a region B2 (16 assemblies); a region C (28 assemblies ); and a region D (28 assemblies). In the case of substitution between borated water and heavy water as a fluid of each substitution region, an obtained reactivity change is about 1% $\Delta K/K$ for A1, A2, A3 and A4, about 2% $\Delta K/K$ for B1 and B2, and about 3.5% $\Delta K/K$ for C and D. In this case, borated water to be used has a concentration of about 4000ppm in boron-10 concentrated to 90 W/O, which is constant during operation and a change in concentration as in the case of conventional chemical shim is not required. Moreover, in the case of substitution between heavy water and light water, an obtained reactivity change is about 0.2% $\Delta K/K$ for A1, A2, A3, and A4, about 0.4% $\Delta K/K$ for B1 and B2, and about 0.7% $\Delta K/K$ for C and D. Here, by fluid substitution in each region, the regions B1 , B2, C, and D are mainly utilized for a spectral shift to compensate a reactivity change from low to high temperatures as well as to improve fuel economy. The regions A1, A2, A3, and A4 are mainly utilized to compensate a reactivity change from low to high temperatures, to compensate a reactivity change by xenon, and to regulate reactivity for criticality.

The reactivity control method of this invention is effected using the system composed as stated above.

a. Before start-up, reactivity is the highest and the reactivity to be suppressed is great, so that water displacer tubes 17 in all of the 8 regions are filled with borated water.

b. After a lid is applied to the reactor vessel 22 and a primary coolant is heated, a reactor reaches a high-temperature zero power stage when valves V16 and V2 to the the substitution region D are opened to transfer borated water in the water displacer tube 17 included in the substitution region D into the borated water tank 67. At this time, water in the water displacer tube 17 falls by flushing and head difference. When the water in the water displacer tube 17 is removed, the valve V2 is closed.

Subsequently, a valve V6 is opened and the heavy water feed pump 72 is actuated to charge heavy water into the water displacer tube 17. After the water displacer tube 17 is filled with heavy water, the valve V6 is closed and heavy water feed pump 72 is stopped.

In the same manner, borated water in the substitution regions C, B2, B1, and A4 is replaced by heavy water in succession.

c. Under these conditions, control rods are withdrawn to attain criticality and increase power. A reactivity decrease by xenon accumulation accompanying power increase in compensated as stated above with the substitution of heavy water for borated water in the substitution regions A3, A2, and A1. In addition, reactivity regulation is performed by the substitution between heavy water and light water as a fluid in A1, A2, A3, and A4 when necessary. However, this reactivity regulation, though not great, cannot be effected continuously, so that fine tuning is conducted by control rods.

d. A reactivity change by a decrease in a fissile material with burn-up is basically designed to be compensated by the utilization of burnable poison, but it is difficult to attain criticality just at rated power, so that reactivity regulation performed by substitution between heavy water and light water when necessary as a fluid for the substitution regions A1, A2, A3, and A4 as well as by fine tuning of control rods.

FIG.20 shows an example of a change in a neutron multiplication factor Keff of the core with burn-up and the core condition of each substitution region. In the period from burnup F0 to F1, the regions B1, B2, C, and D are filled with heavy water having lower neutron slowing down power than that of light water, in order to shift a neutron energy spectrum to a high-energy side for higher plutonium production. Provided that a Keff change by the burn-up of fuel and burnable poison in the period from burnup F0 to F1 under these conditions is expressed in a curve G, the criticality of the core is maintained under a condition ① by filling the regions A1 and A2 with light water and the regions A3 and A4 with heavy water, as well as fine tuning of reactivity by control rods. When the period advances from the condition ① to a condition ②, light water in the region A2 is replaced by heavy water. Further, a condition ③ is reached, light water in the region A1 is replaced by heavy water. In the same manner, substitution between light water and heavy water in the regions A1, A2, A3 and A4 is executed in response to the reactivity of the core.

e. At the point of burnup F1 where burn-up advances, reactivity decreases, and criticality cannot be maintained by the reactivity regulation of the regions A1, A2, A3, and A4, heavy water in the region D is replaced by light water to heighten reactivity. At this time, reactivity regulation is performed by substitution between light water and heavy water in the regions A1, A2, A3, and A4 as well as by fine tuning of control rods.

f. As burn-up progresses further, heavy water in the regions A1, A2, A3, and A4 is replaced by light water in succession for reactivity regulation. Burn-up advances even further, and when burnup F2 is reached, heavy water in thce region C is replaced by light water, and when burnup F3 is reached, the same procedure is performed with the regions B2 and B1. At this time, reactivity regulation is effected by substitution in the regions A1, A2, A3, and A4 as well as by some movement of control rods.

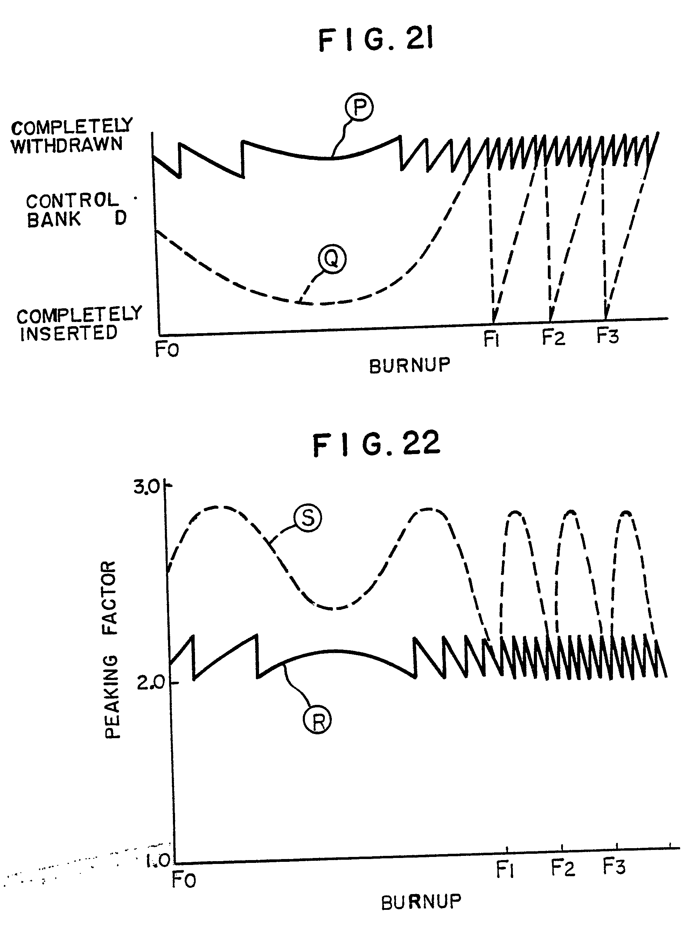

g. In the case of plant shutdown, a high-temperature zero power stage is reached by control rods, and light water in the water displacer tube 17 is replaced by borated water. After that, cooling of a primary cooling system is started to bring the plant into low-temperature shutdown. FIG. 21 shows a comparison between the control rod insertion degree of the reactivity control method of this invention and that of the reactivity control method using only control rods, when chemical shim is deleted. As these control rods, an example using 4 units of control bank D shown in FIG.19 is presented, and the control rod worth is about 1% ΔK/K. In FIG.21, a curve P shows the insertion degree of the control bank D in the reactivity control method of this invention, while a curve Q shows the insertion degree of the control bank D in the reactivity control method using only control rods. This indicates that the insertion degree of control rods is low in the method of this invention.

FIG.22 shows a change in three-dimensional peaking in the above case. A curve R shows a peaking change by the method of this invention, and a curve S shows a peaking change by the reactivity control method using only control rods, which indicates that peaking by the method of this invention is kept low.

This is due to the fact that in the case of this invention, the insertion degree of control rods is low and thus the distortion of power distribution is small, whereas in reactivity control by control rods, the control rods as strong absorbers show great movement, resulting in greater distortion of power distribution.

In this example, heavy water is used, but instead of heavy water, a gas such as He or Ar with low neutron slowing down power can also be employed.

This invention provides reactivity control without adding control rods even in the core deleting chemical shim, as well as reduction of construction cost. Moreover, this reactivity control method eliminates the need for great movement of control rods as strong absorbers during rated power operation, and allows to suppress power peaking.

Subsequently, another embodiment is explained.

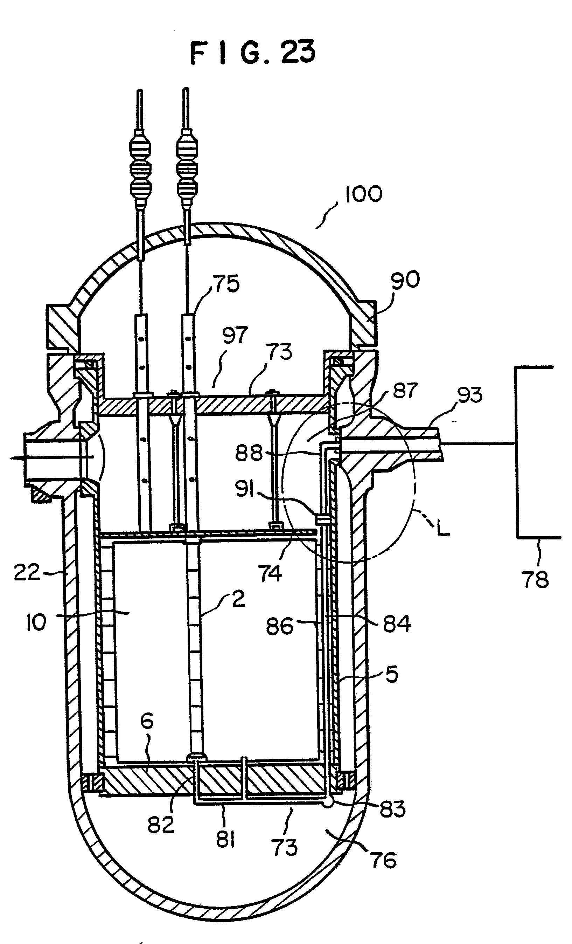

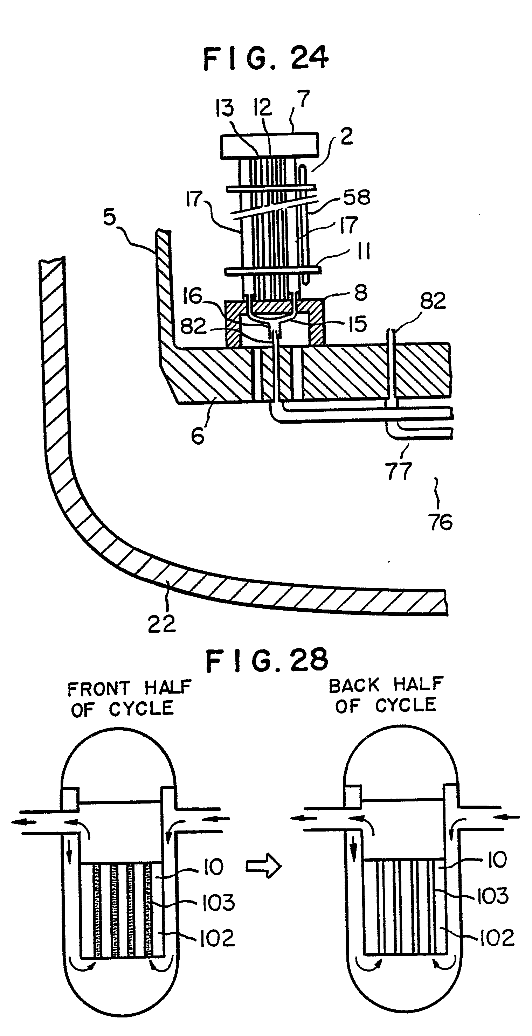

In FIG.23 and FIG. 24, numeral 100 designates a nuclear reactor, and the nuclear reactor 100 has a reactor vessel 22, and the top opening of the reactor vessel 22 is closed with a vessel lid 90.

Inside the reactor vessel 22, an upper core support plate 73 and a core barrel 5 are supported, and a lower core plate 6 is supported at the bottom of the core barrel 5. On the lower core plate 6 a core 10 is supported. At the top of the core 10 there is an upper core plate 74. A control rod cluster guide tube 75 is attached to the upper core plate 74, and a control rod cluster (not shown) is inserted into a fuel assembly 2 in the core 10, guided with the control rod cluster guide tube 75.

The fuel assembly 2 has structural members of a top nozzle 7, a bottom nozzle 8, spacer grids 11, and control rod guide thimbles 12 ; fuel rods 13, water displacer tubes 17, and an instrumentation guide tube 58 are placed between the top nozzle 7 and the bottom nozzle 8.

One or a plurality of the water displacer tubes 17 are provided for a fuel assembly, and are hollow tubes with sealed top ends. The water displacer tubes constitute one set with every plurality of pieces, and the one set of the water displacer tubes are linked by a linking tube 15 at the leg part of the bottom nozzle 8. The linking tube 15 has a connecting opening 16 for the charge and discharge of light water or borated water or heavy water or a gas. The linking pipe 15 connects with a substitution system 76 at a connecting opening 16. The substitution system 76 has a charging pipe 77 and a charge/discharge system 78.

The charging pipe 77 on the side of core internals is composed of a branch pipe 81 under the lower core plate, a sub-branch pipe 82, a main pipe 83, and a riser pipe 84. The branch pipe 81 combines with the sub-branch pipe 82 from the connecting opening 16 with the fuel assembly 2 to t bottom surface of the lower core plate 6, and is connected to the main pipe 83. The main pipe 83 connects to the riser pipe 84, and the riser pipe 84 penetrates the lower core plate 6, rises through a region between a baffle plate 86 forming the core and the core barrel 5, and reaches an upper plenum part 87.

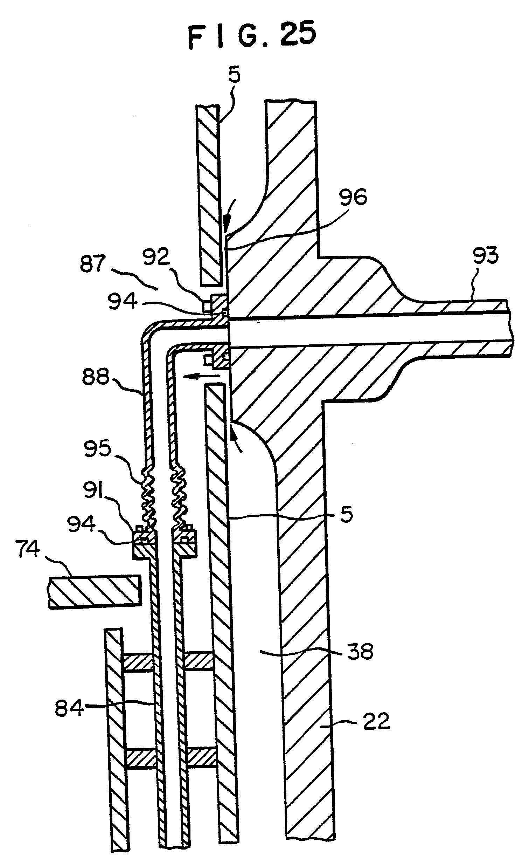

FIG.25 shows the details of the charging pipe 77 in the upper plenum part 87. The riser pipe 84 is connected through a flange 91 to a connecting pipe 88 above the upper core plate 74. The other end of the connecting pipe 88 is connected through a flange 92 to an inlet pipe 93. The flanges 91 and 92 are provided with sealing materials 94. The connecting pipe 88 is provided with a bellows 95 to accommodate differences in thermal expansion and fabrication tolerance between the reactor vessel 22 and the core barrel 5. Moreover, when the core barrel 5 is required to be taken out of the reactor vessel 22 during regular inspection, t he core barrel 5 can be taken out by disengaging the connecting pipe 88. In addition, disengaging the connecting pipe 88 allows the replacement of the sealing material 94. In the vicinity of the flange 92 which is the connecting position of the connecting pipe 88 and the inlet pipe 93 on the side of the reactor vessel, the surfaces of the reactor vessel 22 and the core barrel 5 are provided with a fitting structure 96, whereby preventing the inflow of a bypass flow from the side of a downcomer 38 to the upper plenum part 87.

The inlet pipe 93 connects with the charge/discharge system 78. The charge/discharge system 78 includes a light water charge/discharge system, a borated water charge/discharge system, and a heavy water charge/discharge systeom (not shown).

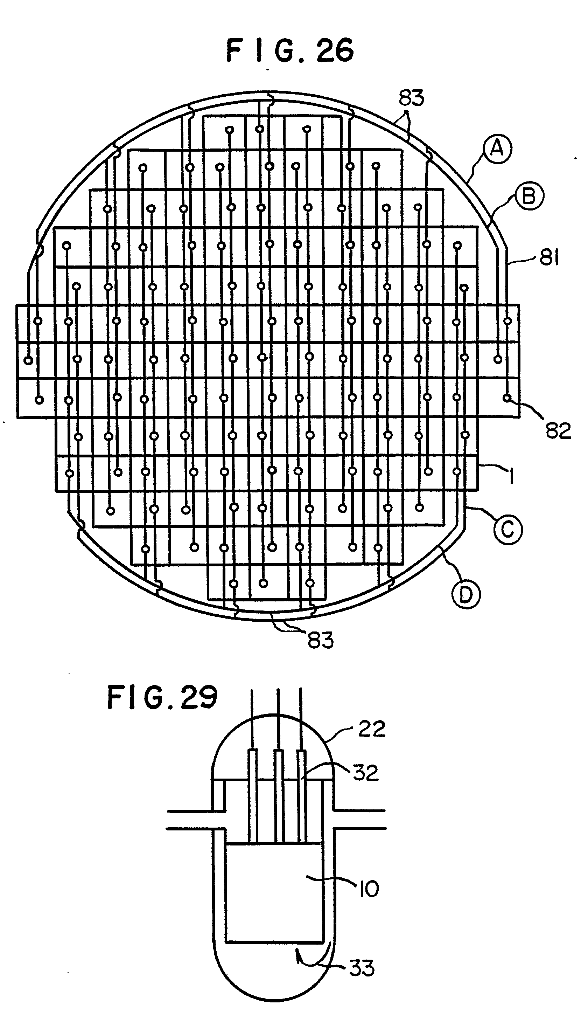

FIG.26 shows an example of laying of the charging pipe 77 under the lower core plate 6. In this example, water displacer tubes 17 in the core are separated into 4 systems, and therefore the example indicates the case where the charging pipe consists of the 4 systems from A to D. Each system has the main pipe 83, which is laid around by half the outside of the core 10. The branch pipes 81 from the main pipes 83 are arranged in parallel every other row of fuel assemblies 2, and connected to sub-branch pipes 82 in the specified fuel assembly positions.

Riser pipes 84 are not shown in FIG.26, but each is connected to each main pipe. This structure permits the branch pipes 81 to be laid in parallel without crossing each other, and in the case where the number of systems increases, the number of the main pipes 83 can be increased.

The flow of a fluid in a piping structure with such composition is as follows. In performing the regulation of core reactivity and in the case of substituting a fluid in the displacer tube 17 of the fuel assembly 2, for example substituting light water for heavy water, a valve (not shown) and a pump (not shown) provided for the inlet pipe 93 are operated to recover heavy water in the water displacer tube 17 into the charge/discharge system 78. At this time, heavy water in the water displacer tube 17 flows from the connecting opening 16 of the linking pipe 15 into the sub-branch pipe 82, further merges with heavy water from other sub-branch pipes in the branch pipe 81, rises in the riser pipe 84 through the main pipe 83, and enters the charge/discharge system 78 after passing through the connecting pipe 88 with the bellows 95 and the inlet pipe 93. After the recovery of heavy water is completed in shch a manner, light water is charged from the charge/discharge system 78 into the water displacer tube 17. Light water to be charged passes inversely through the channel where the heavy water passed as stated above, and reaches the water displacer tube 17.

Subsequently, the installation or handling during inspection of the above-stated piping structure is explained.

The installation or inspection of the piping structure requires the removal of the core barrel 5. At first, a vessel lid 90 of the reactor vessel is removed, and then a control rod cluster guide tube 75, an upper core support plate 73, and an upper core plate 74, since constituting an integrated upper structure, can be taken out at a time. Under this condition, the upper plenum part 87 is empty, so that the connecting pipe 88 becomes accessable and the connecting pipe 88 can be removed. Under such a condition, the core barrel 5 can be lifted. The piping structure can be accessed in this manner. In housing the core barrel 5 in the reactor vessel 22, the inverse procedures are performed.

In this invention, the inlet pipe 93 is drawn to the upper plenum part 87 utilizing a dead space between the baffle plate 85 and the core barrel 5, so that the connection position with the inlet pipe 93 on the side of the reactor vessel can be provided above the core 10, almost without affecting the design of other core internals. As a result, when upper internals 97 are removed in normal fuel replacement or in regular inspection, the connecting position can readily be accessed and connection can be secured using bolts and the like. Moreover, in the connecting position, a through hole is formed in the core barrel 5, so that a bypass flow is generated from the side of the downcomer 38 to the upper plenum part 87 and lowers the heat removing capability of the core ; yet, the amount of the bypass flow can be minimized by providing a fitting structure 96 for the sides of the core barrel 5 and the reactor vessel 22.

Under the lower core plate 6, the main pipe is laid around the outside of the core 10 and branch pipes 81 extend from the main pipe 83 in parallel, so that a simple structure can be provided without crossing the branch pipes with each other, whereby improving reliability.

Furthermore, to be especially important in this invention, the outlet tube 93 is connected to the connecting pipe 88 at the shell of reactor vessel 22 above the core, so that even in case where the outlet pipe 93 fails outside the reactor vessel 22, a coolant in the core is not lost, whereby solving the safety problem.

## Claims

(1) A method of controlling the reactivity of a light-water-cooled, light-water-moderated reactor core, characterized in that the core of a light-water-cooled, light-water-moderated reactor is separated into a coolant region through which a coolant passes and a substitution region capable of substituting a fluid, and that the fluid in said substitution region is substituted between light water and a water displacer material in order to control the reactivity of the reactor core.

(2) A method of controlling the reactivity of a light-water cooled, light-water-moderated reactor core according to claim (1), characterized in that said water displacer material is a fluid such as heavy water, helium, or argon with lower neutron slowing down power than that of light water.

(3) A method of controlling the reactivity of a light-water-cooled, light-water-moderated reactor core according to claim (1) or (2), which is a reactivity control method for a reactor core having a spectral-shift-type core of the type that the core of a light-water-cooled, light-water-moderated reactor is separated into a coolant region and a substitution region, and that in the case of operation with a neutron spectrum shifted to a high-energy side, a fluid as a water displacer material is charged into said substitution region, and in the case of operation with the neutron spectrum shifted to a low-energy side, the water displacer material in said substitution region is replaced by water, characterized in that the bottom end of a water displacer tube provided for said substitution region is connected to a fluid charge/discharge pipe, that the water displacer material charged into said water displacer tube in the case of operation with said neutron spectrum shifted to a high-energy side is discharged by pressure reduction out of a reactor vessel through said fluid charge/discharge pipe, and that subsequently water is charged by pressurization from the outside of the reactor vessel through said fluid charge/discharge pipe into said water displacer tube.

(4) A method of controlling the reactivity of a light-water-cooled, light-water-moderated reactor core according to claim (1) or (2), characterized in that the core of a light-water-cooled, light-water-moderated reactor is separated into a coolant region through which a coolant passes and a substitution region capable of substituting a fluid, and that the fluid in said substitution region is substituted between light water and a water desplacer material in order to control the reactivity of the reactor core by compensating a reactivity change accompanying load-follow operation.

(5) A method of controlling the reactivity of a light-water-cooled, light-water-moderated reactor core according to claim (4), characterized in that said substitution region is divided into a plurality of substitution region compartments, and that said substitution is performed with each of said substitution region compartments.

(6) A method of controlling the reactivity of a light-water-cooled, light-water-moderated reactor core according to claim (4) or (5), characterized in that the case of a part with a water displacement fraction of 20% equivalent or less out of said substitution region, the substitution region is divided into a plurality of groups, and that fluids in the corresponding groups are substituted between water and a water displacer material in succession and further control rods are used on the auxiliary bias in order to perform reactivity compensation

(7) A method of controlling the reactivity of a light-water-cooled, light-water-moderated reactor core according to claim (4), (5), or (6), characterized in that in the case of a part with a water displacement fraction of 5% equivalent or less out of said substitution region, the substitution region is divided into a plurality of groups, and that fluids in the corresponding substitution region are substituted between water and a water displacer material in succession with respect to each group in order to compensate a reactivity change caused by a change in the amount of xenon accompanying load-follow operation, and as an auxiliary means for reactivity compensation by control rods for a power change.

(8) A method of controlling the reactivity of a light-water-cooled, light-water-moderated reactor core according to claim (1) or (2), characterized in that in the case of a fuel assembly having a control rod guide thimble tube, at least either of a plug or a water displacer tube which can be inserted into said control rod guide thimble tube is provided on a spider of a water displacer tube cluster which is exchangeably attached to said fuel assembly in order to separate the core of a light-water-cooled, light-water-moderated nuclear reactor into a coolant region through a coolant passes and a substitution region capable of substituting a fluid, and that the fluid in said substitution region is substituted between light water and a water displacer material in order to control the reactivity of the reactor core.

(9) A method of controlling the reactivity of a light-water-cooled, light-water-moderated reactor core according to claim (1) or (2), characterized in that the core of a light-water-cooled, light-water-moderated reactor is separated into a coolant region through which a coolant passes and a plurality of substitution region groups capable of substituting fluids, and that under high-temperature conditions of the core said fluids in a plurality of said substitution region groups are substituted between light water and a water displacer material in response to the core condition.

(10) A method of controlling the reactivity of a light-water-cooled, light-water-moderated reactor core according to claim (9), characterized in that substitution regions included in each of said substitution region groups are arranged symmetrically with respect to X and Y axes included in the cross section of the reactor core.

(11) Equipment of controlling the reactivity of a light-water-cooled, light-water-moderated reactor core, comprising :
a fuel assembly having one or a number of hollow water displacer tubes with sealed top ends, a set consisting of a plurality of said water displacer tubes wherein the bottom ends of said water displacer tubes are communicated with each other through a linking pipe, and a fluid charge/discharge connecting opening provided for each of said sets ; and
a fluid charge/discharge device capable of charging a fluid into, and discharging the same out of, said water displacer tubes through said fluid charge/discharge connecting opening.

(12) Equipment of controlling the reactivity of a light-water-cooled, light-water-moderated reactor core according to claim (11), characterized in that said fluid charge/discharge device has at least a fluid recovery tank, a gas surge tank, and a water feed pump, and that said fluid recovery tank, said gas surge tank, and a said water feed pump are provided below said water displacer tubes.

(13) Equipment of controlling the reactivity of a light-water-cooled, light-water-moderated reactor core, having a water displacer tube cluster device providing ; a spider which is equipped, in the case of said fuel assembly having a control rod guide thimble tube, with a plug and at least a part of water desplacer tubes among a plurality of said water displacer tubes which can closely be inserted into said control rod guide thimble tubes ; an attachment capable of attaching said spider removably to a bottom nozzle adaptor plate of said fuel assembly ; said water displacer tubes with a sealed internal space capable of holding a fluid ; said spider with a passage in communication with said internal space of said water displacer tubes ; and said passage with connectability with a water displacer material charge/discharge device.

(14) Equipment of controlling the reactivity of a light-water-cooled, light-water-moderated reactor core according to claim (11), having a piping structure which charges a fluid into, and discharges the same out of, said water displacer tubes, from and to a substitution system located outside said reactor vessel, and characterized in that in said piping structure, a part penetrating said reactor vessel is provided so as to be located above said core.

(15) Equipment of controlling the reactivity of a light-water-cooled, light-water-moderated reactor core according to claim (14), characterized in that the part penetrating said reactor vessel is so provided as to be located in a section where said reactor vessel partitions an upper plenum part.

# FIG. 1

# F I G. 2

# F I G. 5

# F I G. 3

# F I G. 6

# F I G. 4

# F I G. 7(a)

# F I G. 7(b)

F I G. 8

53
17
52
48
46
51
42
47
44
17
17
41b

F I G. 9

VIII
17
41b
17
42
17
VIII

# F I G. 10

# F I G. 11

# F I G. 12

# F I G. 13

# F I G. 14

# F I G. 15

EP 0 300 745 A2

F I G. 16

# F I G. 17

# F I G. 19

FIG. 18

EP 0 300 745 A2

# F I G. 20

EP 0 300 745 A2

CONDITIONS OF
EACH REGION

| | | | | | |
|---|---|---|---|---|---|
| B₁ | $D_2O$ | | $D_2O$ | $D_2O$ | $H_2O$ |
| B₂ | $D_2O$ | | $D_2O$ | $D_2O$ | $H_2O$ |
| C | $D_2O$ | | $D_2O$ | $H_2O$ | $H_2O$ |
| D | $D_2O$ | | $H_2O$ | $H_2O$ | $H_2O$ |

| CONDITIONS OF EACH REGION | | | | REMARKS |
|---|---|---|---|---|
| A₁ | A₂ | A₃ | A₄ | |
| $D_2O$ | $D_2O$ | $D_2O$ | $D_2O$ | |
| $H_2O$ | $D_2O$ | $D_2O$ | $D_2O$ | |
| $H_2O$ | $H_2O$ | $D_2O$ | $D_2O$ | |
| $H_2O$ | $H_2O$ | $H_2O$ | $D_2O$ | |
| $H_2O$ | $H_2O$ | $H_2O$ | $H_2O$ | |

keff
1.01
G
③
②
①
1.00
F0  F1  F2  F3

→ BURNUP

FINE REACTIVITY
CONTROL IS PERFORMED
BY CONTROL RODS

# F I G. 21

COMPLETELY
WITHDRAWN

CONTROL
BANK   D

COMPLETELY
INSERTED

F0        F1    F2    F3

BURNUP

# F I G. 22

PEAKING  FACTOR

3.0

2.0

1.0   F0        F1    F2    F3

BURNUP

# F I G. 23

# FIG. 24

13 12 7
2
17 58
17
11
5
16 8
82 15
82
82
6
77
76
22

# FIG. 28

FRONT HALF
OF CYCLE

BACK HALF
OF CYCLE

10
103
102

10
103
102

# F I G. 25

# FIG. 26

# FIG. 29

# F I G. 27